(19) Europäisches Patentamt
European Patent Office
Office européen des brevets

(11) **EP 4 691 615 A1**

(12) **EUROPEAN PATENT APPLICATION**
published in accordance with Art. 153(4) EPC

(43) Date of publication:
**11.02.2026 Bulletin 2026/07**

(21) Application number: 24784620.7

(22) Date of filing: **21.02.2024**

(51) International Patent Classification (IPC):
**B01D 71/26** (2006.01)    **B01D 69/00** (2006.01)
**B01D 69/02** (2006.01)    **B01D 71/02** (2006.01)
**C08J 9/26** (2006.01)    **D01F 6/04** (2006.01)

(52) Cooperative Patent Classification (CPC):
**B01D 69/00; B01D 69/02; B01D 71/02;**
**B01D 71/26; C08J 9/26; D01F 6/04**

(86) International application number:
**PCT/JP2024/006234**

(87) International publication number:
**WO 2024/209818 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.04.2023 JP 2023061160**

(71) Applicant: **Toray Industries, Inc.**
**Tokyo 103-8666 (JP)**

(72) Inventors:
• **AKUTSU, Miku**
**Otsu-shi, Shiga 520-8558 (JP)**
• **TAGUCHI, Marina**
**Otsu-shi, Shiga 520-8558 (JP)**
• **AOYAMA, Shigeru**
**Otsu-shi, Shiga 520-8558 (JP)**
• **YAMAMURA, Gohei**
**Otsu-shi, Shiga 520-8558 (JP)**

(74) Representative: **Kador & Partner Part mbB**
**Corneliusstraße 15**
**80469 München (DE)**

(54) **SEPARATION MEMBRANE, METHOD FOR MANUFACTURING SAME, MEMBRANE MODULE FOR AT LEAST ONE OF DEAERATION AND AERATION, AND DEVICE FOR AT LEAST ONE OF DEAERATION AND AERATION**

(57) The present invention addresses the problem of providing a separation membrane that demonstrates low leakage while maintaining high gas permeability performance by using poly(4-methyl-1-pentene), which is excellent in solvent resistance and gas permeability. The present invention relates to a separation membrane which contains poly(4-methyl-1-pentene) as a main component, has an average pore diameter of 0.10-1.00 nm as converted from a NKP plot, and has a porosity of 40-70%. When the separation membrane is divided into five regions which are noted as 1-5, from one surface of the membrane in the direction of the thickness at equal intervals, the pore diameter variation coefficient $\alpha_i$ is 0-150% in all of the regions 1-5.

FIG. 1

MEMBRANE SURFACE

5.00μm

EP 4 691 615 A1

**Description**

TECHNICAL FIELD

The present invention relates to a separation membrane, a method for manufacturing same, a membrane module for at least one of deaeration and aeration, and a device for at least one of deaeration and aeration.

BACKGROUND ART

As a deaerating method for removing a dissolved gas from a liquid or a gas exchange method for exchanging a dissolved gas in a liquid with a gas component in a gas phase, there is a method using a hollow fiber membrane. Since the hollow fiber membranes used in these applications are required to have solvent resistance to a liquid to be treated and high gas permeability, poly (4-methyl-1-pentene) excellent in these properties may be used as a membrane material. Among such membranes, a membrane having a thin dense layer of 2.0 $\mu$m or less is desirable in that gas permeability can be enhanced. Meanwhile, in such a membrane having a thin dense layer, a through pore known as a defect is easily formed in the dense layer, and a solution leaks from the pore as a starting point, so that the leakage tends to be high.

Various methods have been proposed to obtain a gas permeable membrane having high permeability and low leakage. For example, Patent Literature 1 discloses a dry wet solution method using a polyolefin-based polymer. Specifically, in Patent Literature 1, a polymer solution obtained by dissolving a polyolefin-based polymer in a good solvent is cooled with a cooling medium having a temperature lower than a solidification temperature, and an asymmetric structure having a dense layer on one surface is formed by thermally induced phase separation by thermally induced phase separation.

However, the membrane according to Patent Literature 1 requires that the pore diameter of the dense layer be less than 100 nm, and there is a problem that the solution is easily leaked from the pores of the dense layer.

Patent Literature 2 discloses a hollow fiber membrane manufactured by a melting method. Specifically, a polyolefin-based resin is extruded from a die at a temperature equal to or higher than a melting point of the polyolefin-based resin, then a gas is brought into contact with an inner surface and an outer surface to perform cooling and solidifying, and the polyolefin-based resin is then cleaved by stretching to form a porous structure. In this method, a membrane having high gas permeability is obtained, but since the surface has a porous structure, there is a problem that the solution easily leaks.

Patent Literature 3 discloses a hollow fiber membrane manufactured by a melting method. Specifically, a polyolefin-based resin is extruded from a die at a temperature equal to or higher than a melting point of the polyolefin-based resin, cooled and solidified, and then stretched to induce partial cleaving, thereby forming internal pores and resulting in a structure with a dense surface layer and a porous interior. In this method, a membrane having low leakage is obtained, but there is a problem that the gas permeability is not sufficient due to a structure having a low porosity.

CITATION LIST

PATENT LITERATURE

Patent Literature 1: JP2005-515061A
Patent Literature 2: JPH8-332359A
Patent Literature 3: JPH7-155569A

SUMMARY OF INVENTION

TECHNICAL PROBLEM

According to the findings of the present inventors, although the separation membranes according to Patent Literatures 1 and 2 have high gas permeability, the pore diameter on the membrane surface is coarse, making it difficult to achieve low leakage. In addition, according to the findings of the present inventors, the separation membrane obtained in Patent Literature 3 has low leakage, but does not have sufficient gas permeability due to a structure having a low porosity.

In view of the problems in the related art, an object of the present inventors is to provide a separation membrane having low leakage while maintaining high gas permeability using poly (4-methyl-1-pentene).

SOLUTION TO PROBLEM

As a result of intensive studies to solve the above problems, the present inventors have found that by using a separation membrane containing poly (4-methyl-1-pentene) as a main component, with an average pore diameter converted from an NKP plot within a specific range, a porosity within a specific range, and when the separation membrane is sequentially divided into five regions which are defined as regions 1 to 5, from one surface of the separation membrane in a thickness direction at equal intervals, a pore diameter variation coefficient $\alpha_i$ being within a specific range in all of the regions 1 to 5, it is possible to achieve both high gas permeability and low leakage, and this finding led to the completion of the present invention. In the present specification, "to" means that numerical values described before and after "to" are included as a lower limit value and an upper limit value.
According to the present invention, the following aspects are provided.

[1]
A separation membrane including poly (4-methyl-1-pentene) as a main component, in which

an average pore diameter converted from an NKP plot is 0.10 nm to 1.00 nm,
a porosity is 40% to 70%, and
when the separation membrane is sequentially divided into five regions which are defined as regions 1 to 5 from one surface of the separation membrane in a thickness direction at equal intervals, a pore diameter variation coefficient $\alpha_i$ of a region i is 0% to 150% in all of the regions 1 to 5.

[2]
The separation membrane according to [1], in which
in the regions 1 to 5, an average pore diameter $D_i$ of the region i satisfies the following requirement (a) or (b):

$$(a)\ D_1 \geq D_2 \geq D_3 \geq D_4 \geq D_5,$$

$$(b)\ D_5 \geq D_4 \geq D_3 \geq D_2 \geq D_1.$$

[3]
The separation membrane according to [1] or [2], in which
an average aperture ratio of a cross section of the separation membrane is 25% to 50%.
[4]
The separation membrane according to [2], in which
the separation membrane has a dense layer on a surface of $D_5$ when the average pore diameter $D_i$ satisfies the requirement (a), and has the dense layer on a surface of $D_1$ when the average pore diameter $D_i$ satisfies the requirement (b).
[5]
The separation membrane according to [4], in which
the dense layer has a thickness in a range of 0.1 $\mu$m to 2.0 $\mu$m.
[6]
The separation membrane according to any one of [1] to [5], in which
the separation membrane has a ratio of a $CO_2$ permeability to an $N_2$ permeability (separation coefficient $\beta$ ($CO_2/N_2$)) of 5.0 to 100.0 at a differential pressure of 100 kPa.
[7]
The separation membrane according to any one of [1] to [6], in which
the separation membrane has the $N_2$ permeability of 5 GPU to 400 GPU at a differential pressure of 100 kPa and 37°C.
[8]
The separation membrane according to any one of [1] to [7], in which
the separation membrane has a hollow fiber shape.
[9]
The separation membrane according to [8], in which

in the regions 1 to 5, the separation membrane has a dense layer on a surface of $D_5$ when an average pore diameter $D_i$ of the region i satisfies the following requirement (a), has the dense layer on a surface of $D_1$ when the average pore diameter $D_i$ satisfies the following requirement (b), and
in either case of satisfying the following requirement (a) or (b), a surface on a side having the dense layer is an outer surface of the hollow fiber shaped separation membrane:

$$\text{(a) } D_1 \geq D_2 \geq D_3 \geq D_4 \geq D_5,$$

$$\text{(b) } D_5 \geq D_4 \geq D_3 \geq D_2 \geq D_1.$$

[10]
A membrane module for at least one of deaeration and aeration, the membrane module including:

a case; and
the separation membrane according to any one of [1] to [9], in which
the separation membrane is contained in the case.

[11]
A device for at least one of deaeration and aeration, the device including the membrane module for at least one of deaeration and aeration according to [10].
[12]
A method for producing a liquid, the method including:
at least one of removing a dissolved gas and applying a gas using the device for at least one of deaeration and aeration according to [11].
[13]
A method for manufacturing a separation membrane, the method including:

(1) a preparation step of melt-kneading a mixture containing 10 mass% or more and 50 mass% or less of poly (4-methyl-1-pentene) and 50 mass% or more and 90 mass% or less of a plasticizer to obtain a resin composition; and
(2) a forming step of ejecting the resin composition from an ejection die, exhausting a volatilized plasticizer at a wind speed of 8 m/s to 20 m/s, and then immersing the resin composition in a cooling bath using a solvent having a solubility parameter distance Ra for poly (4-methyl-1-pentene) in a range of 5.0 MPa$^{1/2}$ or more and 18 MPa$^{1/2}$ or less and a solubility parameter distance Rb for the plasticizer in a range of 1.0 MPa$^{1/2}$ or more and 2.9 MPa$^{1/2}$ or less or 6.5 MPa$^{1/2}$ or more and 10.0 MPa$^{1/2}$ or less, followed by winding the resin composition.

[14]
The method for manufacturing a separation membrane according to [13], in which
the cooling bath in the forming step is at 15°C to 45°C.
[15]
The method for manufacturing a separation membrane according to [13] or [14], in which
the winding in the forming step has a draft ratio of 3.0 to 20.0.

ADVANTAGEOUS EFFECTS OF INVENTION

According to the present invention, a separation membrane having high gas permeability and low leakage is provided using poly (4-methyl-1-pentene).

BRIEF DESCRIPTION OF DRAWINGS

[FIG. 1] FIG. 1 illustrates an example of a cross-sectional image of a separation membrane fractured in a thickness direction, captured by an SEM at a magnification of 10,000 times.
[FIG. 2] FIG. 2 illustrates an image obtained by binarizing the image in FIG. 1 and then removing noise.
[FIG. 3] FIG. 3 illustrates a dense layer thickness obtained by extracting an outline of a void larger than 10 nm from the image in FIG. 2.

DESCRIPTION OF EMBODIMENTS

A separation membrane of an embodiment of the present invention (hereinafter, also referred to as "the present embodiment") contains poly (4-methyl-1-pentene) as a main component, has an average pore diameter converted from an NKP plot of 0.10 nm to 1.00 nm, and a porosity of 40% to 70%, and when the separation membrane is sequentially divided into five regions which are defined as regions 1 to 5, from one surface of the separation membrane in a thickness direction at equal intervals, a pore diameter variation coefficient $\alpha_i$ of a region i is 0% to 150% in all of the regions 1 to 5. In the present specification, a ratio (percentage, part, etc.) based on mass is the same as a ratio (percentage, part, etc.) based on weight.

(Resin Composition Constituting Separation Membrane)

The resin composition constituting the separation membrane according to the present embodiment contains poly (4-methyl-1-pentene) indicated by the following (1) as a main component. In addition to (1), the resin composition may contain components indicated by the following (2) and (3).

(1) Poly (4-Methyl-1-Pentene) (Hereinafter, Referred to as "PMP")

The separation membrane according to the present embodiment needs to contain PMP as a main component. Here, the main component refers to a component contained in the largest amount on a mass reference among all components of the separation membrane.

PMP may have a repeating unit derived from 4-methyl-1-pentene. PMP may be a homopolymer of 4-methyl-1-pentene, or a copolymer of 4-methyl-1-pentene and a monomer copolymerizable with 4-methyl-1-pentene other than 4-methyl-1-pentene. Specific examples of the monomer copolymerizable with 4-methyl-1-pentene include olefins having 2 to 20 carbon atoms (hereinafter, referred to as "olefins having 2 to 20 carbon atoms") other than 4-methyl-1-pentene.

Examples of the olefin having 2 to 20 carbon atoms to be copolymerized with 4-methyl-1-pentene include ethylene, propylene, 1-butene, 1-hexene, 1-heptene, 1-octene, 1-decene, 1-tetradecene, 1-hexadecene, 1-heptadecene, 1-octadecene, and 1-eicosene.

The olefin having 2 to 20 carbon atoms to be copolymerized with 4-methyl-1-pentene may be one kind or a combination of two or more kinds.

The density of PMP in the present embodiment is preferably 825 ($kg/m^3$) to 840 ($kg/m^3$), and more preferably 830 ($kg/m^3$) to 835 ($kg/m^3$). When the density is smaller than the above range, the mechanical strength of the separation membrane is reduced, and problems such as that a defect easily generates may occur. Meanwhile, when the density is higher than the above range, the gas permeability tends to decrease.

The melt flow rate (MFR) of PMP measured at 260°C under a load of 5 kg is not particularly limited as long as PMP is easily mixed with a plasticizer described later and can be co-extruded, but is preferably 1 g/10 min to 200 g/10 min, and more preferably 5 g/10 min to 30 g/10 min. When the MFR falls within the above range, extrusion forming into a relatively uniform membrane thickness is easy.

PMP may be produced directly by polymerizing olefins, or may be produced by thermally decomposing a 4-methyl-1-pentene-based polymer having a high molecular weight. In addition, the 4-methyl-1-pentene-based polymer may be purified by a method such as solvent fractionation in which fractionation is performed based on differences in solubility in solvents or molecular distillation in which fractionation is performed based on differences in boiling points.

PMP may be a commercially available polymer such as TPX manufactured by Mitsui Chemicals, Inc., in addition to those produced as described above.

The content of PMP in the separation membrane is preferably 70 mass% to 100 mass%, more preferably 80 mass% to 100 mass%, and still more preferably 90 mass% to 100 mass% when all components of the separation membrane are taken as 100 mass%. When the content of the PMP in the separation membrane is 70 mass% or more, the gas permeability is sufficient.

The content of PMP in a raw material for manufacturing the separation membrane is preferably 10 mass% to 50 mass% when the total of components constituting the raw material is taken as 100 mass%. When the content is 10 mass% or more, the membrane strength of the separation membrane is improved. Meanwhile, when the content is 50 mass% or less, the permeability of the separation membrane is improved. The content is more preferably 15 mass% to 50 mass%, still more preferably 20 mass% to 45 mass%, and particularly preferably 25 mass% to 40 mass%.

(2) Plasticizer for PMP

The resin composition constituting the separation membrane according to the present embodiment may contain a plasticizer for PMP. From the viewpoint of increasing the permeability, the content of the plasticizer in the separation membrane is preferably 1000 ppm or less, more preferably 500 ppm or less, and particularly preferably 100 ppm or less on a mass reference.

The plasticizer for PMP is not particularly limited as long as the plasticizer is a compound that thermoplasticizes PMP. As the plasticizer for PMP, not only one kind of plasticizer but also two or more kinds of plasticizers may be used in combination.

Examples of the plasticizer for PMP include palm kernel oil, dibutyl phthalate, dioctyl phthalate, dibenzyl ether, coconut oil, and mixtures thereof. Among them, dibutyl phthalate and dibenzyl ether are preferably used in view of compatibility and spinnability.

The plasticizer for PMP is preferably eluted from the separation membrane after the separation membrane is formed. The content of the plasticizer for PMP in the raw material for manufacturing the separation membrane is preferably 50 mass% to 90 mass% when the total of the components constituting the raw material is taken as 100 mass%.

When the content is 90 mass% or less, the membrane strength of the separation membrane is improved. When the content is 50 mass% or more, the permeability of the separation membrane is improved. The content is more preferably 50 mass% to 85 mass%, still more preferably 55 mass% to 80 mass%, and particularly preferably 60 mass% to 75 mass%.

(3) Additives

The resin composition constituting the separation membrane according to the present embodiment may contain additives other than those described in (2) as long as the effects of the present embodiment are not impaired.

Examples of the additive include resins such as cellulose ether, polyacrylonitrile, polyolefin, polyvinyl compounds, polycarbonate, poly(meth)acrylate, polysulfone, or polyethersulfone; organic lubricants, crystal nucleating agents, organic particles, inorganic particles, terminal blocking agents, chain extenders, ultraviolet absorbers, infrared absorbers, coloration inhibitors, matting agents, antibacterial agents, antistatic agents, deodorants, flame retardants, weather resistance agents, antistatic agents, antioxidants, ion exchangers, defoamers, coloring pigments, fluorescent brighteners, and dyes.

(Shape of Separation Membrane)

As the separation membrane according to the present embodiment, a separation membrane having a hollow fiber shape (hereinafter, referred to as "hollow fiber membrane") is preferably adopted, but the separation membrane according to the present invention is not limited to the hollow fiber shape. The hollow fiber membrane is preferable because the hollow fiber membrane can be efficiently filled in a module and an effective membrane area per unit volume of the module can be increased.

The shape of the separation membrane according to the present embodiment, that is, the thickness of the separation membrane, the outer diameter and the inner diameter in the case of the hollow fiber membrane, and the hollowness ratio can be observed, for example, by examining a cross section (hereinafter, referred to as a "radial cross section") of the hollow fiber membrane obtained by applying stress to the hollow fiber membrane sufficiently cooled in liquid nitrogen and fracturing the hollow fiber membrane along the thickness direction of the hollow fiber membrane, by using an optical microscope or a scanning electron microscope (SEM). A specific method will be described in detail in Examples.

The thickness of the separation membrane is preferably 10 $\mu$m to 500 $\mu$m from the viewpoint of achieving both permeability and membrane strength. The thickness is more preferably 30 $\mu$m or more, and still more preferably 50 $\mu$m or more. The thickness is more preferably 200 $\mu$m or less, still more preferably 150 $\mu$m or less, and particularly preferably 100 $\mu$m or less.

The outer diameter of the hollow fiber membrane is preferably 50 $\mu$m to 2500 $\mu$m from the viewpoint of achieving both the effective membrane area when the hollow fiber membrane is filled in the module and the membrane strength. The outer diameter of the hollow fiber membrane is more preferably 100 $\mu$m or more, still more preferably 200 $\mu$m or more, and particularly preferably 300 $\mu$m or more. The outer diameter is more preferably 1000 $\mu$m or less, still more preferably 500 $\mu$m or less, and particularly preferably 450 $\mu$m or less.

In consideration of the relation between a pressure loss of a fluid flowing through a hollow portion and a buckling pressure, the inner diameter of the hollow fiber membrane is preferably 20 $\mu$m to 1000 $\mu$m. The inner diameter of the hollow fiber membrane is more preferably 50 $\mu$m or more, still more preferably 100 $\mu$m or more, and particularly preferably 150 $\mu$m or more. The inner diameter is more preferably 500 $\mu$m or less, still more preferably 300 $\mu$m or less, particularly preferably 250 $\mu$m or less.

In consideration of the relation between the pressure loss of the fluid flowing through the hollow portion and the buckling pressure, the hollowness ratio of the hollow fiber membrane is preferably 15% to 70%. The hollowness ratio is more preferably 20% or more, and still more preferably 25% or more. The hollowness ratio is more preferably 60% or less, still more preferably 50% or less, and particularly preferably 40% or less.

Here, the hollowness ratio is a value calculated by the following formula.

$$\text{Hollowness ratio (\%)} = 100 \times [\text{inner diameter } (\mu\text{m})]^2 / [\text{outer diameter } (\mu\text{m})]^2$$

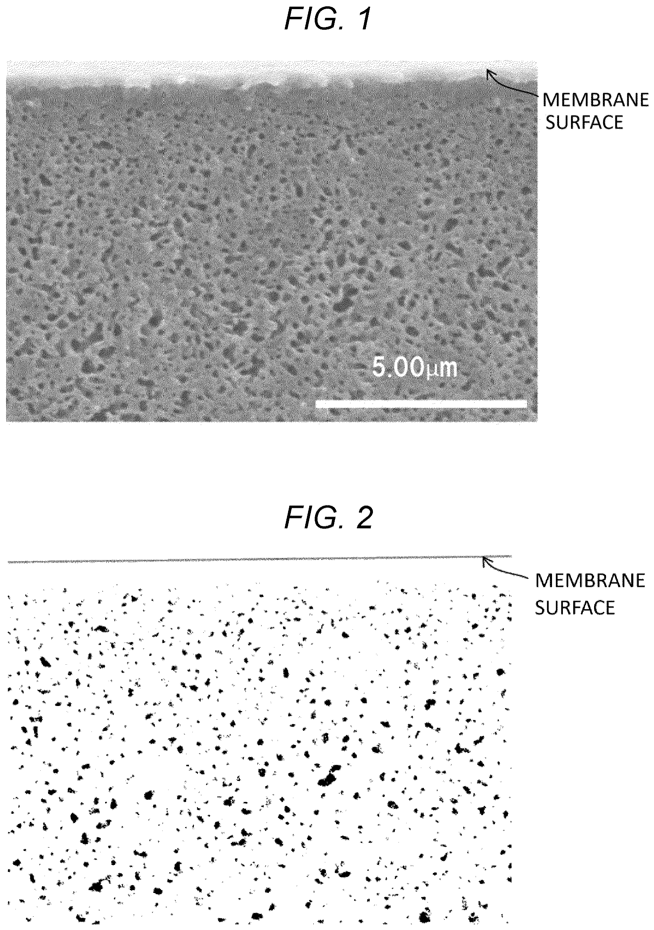

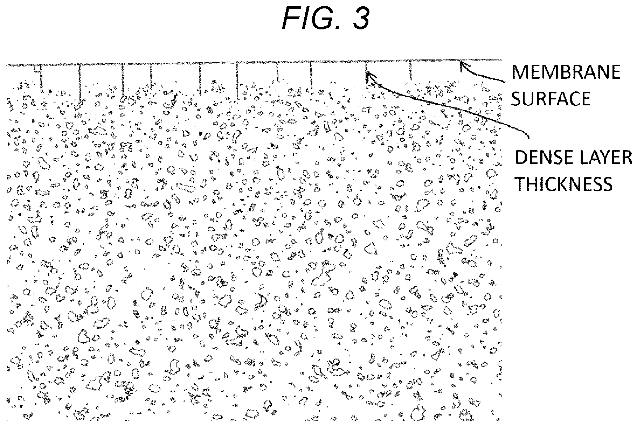

FIG. 1 illustrates an example of a cross-sectional image of the separation membrane fractured in the thickness direction, captured by an SEM at a magnification of 10,000 times, FIG. 2 illustrates an image obtained by removing noise and binarizing the image in FIG. 1, and FIG. 3 illustrates a dense layer thickness obtained by extracting an outline of a void larger than 10 nm from the image in FIG. 2.

The method for setting the outer diameter, the inner diameter, and the hollowness ratio of the hollow fiber in the hollow fiber membrane within the above ranges is not particularly limited, and the outer diameter, the inner diameter, and the hollowness ratio can be adjusted, for example, by appropriately changing the shape of an ejection pore of a spinneret for producing the hollow fiber or a draft ratio that can be calculated by winding speed/ejection speed.

(Average Pore Diameter Converted from NKP Plot)

In the separation membrane according to the present embodiment, it is important that the average pore diameter converted from the NKP plot is 0.10 nm to 1.00 nm. When the average pore diameter converted from the NKP plot is 0.10 nm or more, the permeability is improved, and when the average pore diameter is 1.00 nm or less, the low leakage is improved. The average pore diameter converted from the NKP plot is preferably 0.30 nm to 0.75 nm, more preferably 0.35 nm to 0.60 nm, and still more preferably 0.40 nm to 0.55 nm. The average pore diameter converted from the NKP plot can be estimated by Normalized Knudsen-based Permeance (NKP) as described in a document (Membrane. 2011, 383, 152-158.). The formula defined by NKP is represented by the following Formula (1) from the molecular dependency of the gas permeation coefficient at any temperature at one point when there is no large difference in activation energy for each gas type with reference to He.

[Math. 1]

$$\frac{P_i}{P_{He}} \sqrt{\frac{M_i}{M_{He}}} = \frac{(d_P - d_i)^3}{(d_P - d_{He})} \quad \cdots \cdots \cdot \text{Formula (1)}$$

[Math. 2]

$$P_i[mol/m \cdot s \cdot Pa] = \frac{J \times d}{(P_H - P_L)} \quad \cdots \cdots \cdot \text{Formula (2)}$$

Here, $P_i$ is a gas permeation coefficient of a component i represented by Formula (2), J is a gas flux, d is a membrane thickness, and $P_H$ and $P_L$ are partial pressures on a gas supply side and a gas permeation side, respectively. In addition, $M_i$ is a molecular weight of the component i, $M_{He}$ is a molecular weight of He, $d_p$ is an average pore diameter converted from the NKP plot, $d_i$ is a molecular diameter of the component i, $d_{He}$ is a molecular diameter of He, and the value of $P_i/P_{He}$ can be replaced with a separation coefficient $\beta$ (i/He) of the component i and He described later. The type of gas used as the component i is not limited as long as there is no large difference in activation energy, and for example, $H_2$, $O_2$, $N_2$, or $CH_4$ is preferably used. In the present embodiment, $N_2$ is used from the viewpoint of availability of gas and handleability. In addition, the formula used in this calculation is applied only to a separation membrane having no coarse pores on an outer surface, that is, a separation membrane in which surface pores are not confirmed by surface observation using an SEM or the like.

(Porosity)

In the separation membrane according to the present embodiment, it is important that the porosity is 40% to 70%. When the porosity is 40% or more, the permeability is improved, and when the porosity is 70% or less, the membrane strength is improved. The porosity is preferably 45% to 60%, and particularly preferably 53% to 60%. In order to obtain a porosity in such a range, structure formation using thermally induced phase separation described later is preferably used. The porosity in the present embodiment refers to the porosity of the entire separation membrane, and a specific measurement method for the porosity will be described in detail in Examples.

(Pore Structure of Separation Membrane)

In the separation membrane according to the present embodiment, it is important that values of the variation coefficient $\alpha_i$ of an average pore diameter $D_i$ are all 0% to 150%. The average pore diameter $D_i$ is an average pore diameter in the region i when the separation membrane is sequentially divided into five regions which are defined as regions 1 to 5,

from one surface of the separation membrane in the thickness direction at equal intervals. The average pore diameter $D_i$ can be obtained by applying stress to the separation membrane sufficiently cooled in liquid nitrogen (using a razor, a microtome, or a broad ion beam as necessary) to expose a cross section perpendicular to a longitudinal direction of the separation membrane and parallel to the thickness direction of the membrane (hereinafter, referred to as a "transverse cross section") or a cross section parallel to the longitudinal direction of the separation membrane and parallel to the thickness direction of the membrane (hereinafter, referred to as a "longitudinal cross section"), observing the cross section using a scanning electron microscope (SEM), binarizing the obtained image using image analysis software "ImageJ", and extracting only pores having an average diameter larger than 10 nm.

When the separation membrane is a hollow fiber membrane, the transverse cross section of the hollow fiber membrane is synonymous with the radial cross section. The longitudinal direction of the hollow fiber membrane is a direction perpendicular to a lateral direction of the hollow fiber membrane. In addition, the lateral direction of the hollow fiber membrane is a direction parallel to a radial direction of the hollow fiber membrane, and the lateral direction can be rephrased as a direction parallel to a hollow surface, that is, an in-plane direction of the hollow surface. Therefore, the longitudinal direction of the hollow fiber membrane can be rephrased as a direction perpendicular to the hollow surface.

The regions to be observed are five regions obtained by sequentially dividing the separation membrane into five regions at equal intervals in the thickness direction so that the respective surfaces of the separation membrane become end portions when the transverse cross section or the longitudinal cross section is observed using an SEM. The variation coefficient $\alpha_i$ is a value obtained by dividing the standard deviation of the pore diameters in the observed region i by the arithmetic mean of the pore diameters and multiplying the result by 100. When the variation coefficient is 0% to 150%, since the pore diameter in the region is uniform, it is possible to prevent local leakage of the liquid due to the coarse pores and to achieve both the permeability and low leakage. The variation coefficient $\alpha_i$ is preferably 0% to 120%, more preferably 0% to 100%, and still more preferably 0% to 80%. The average pore diameter $D_i$ is preferably 100 nm to 1000 nm. When the average pore diameter $D_i$ is 100 nm or more, the permeability is improved, and when the average pore diameter $D_i$ is 1000 nm or less, the strength of the separation membrane is improved. The average pore diameter $D_i$ is preferably 120 nm to 800 nm, more preferably 150 nm to 600 nm, still more preferably 170 nm to 400 nm, and particularly preferably 200 nm to 300 nm. A measurement method for the average pore diameter $D_i$ will be described in detail in Examples.

In the separation membrane according to the present embodiment, the average pore diameter $D_i$ preferably satisfies the following requirement (a) or (b):

$$(a)\ D_1 \geq D_2 \geq D_3 \geq D_4 \geq D_5,$$

$$(b)\ D_5 \geq D_4 \geq D_3 \geq D_2 \geq D_1.$$

When the average pore diameter $D_i$ satisfies the requirement (a) or (b), that is, when the average pore diameter $D_i$ increases or decreases stepwise toward one of the surfaces, uniform separation can be performed, local leakage of the liquid due to coarse pores can be prevented, and both permeability and low leakage can be achieved.

(Dense Layer of Separation Membrane)

The separation membrane according to the present embodiment preferably includes a dense layer on at least one surface layer. In the case of the hollow fiber membrane, the dense layer may be on an outer surface side, may be on an inner surface side, or may be on both the outer surface and the inner surface of the hollow fiber membrane, but when the average pore diameter $D_i$ satisfies (a) $D_1 \geq D_2 \geq D_3 \geq D_4 \geq D_5$, the separation membrane preferably has a dense layer on the surface of $D_5$, and when the average pore diameter $D_i$ satisfies (b) $D_5 \geq D_4 \geq D_3 \geq D_2 \geq D_1$, the separation membrane preferably has a dense layer on the surface of $D_1$. When the average pore diameter $D_i$ satisfies (a), the separation membrane has a dense layer on the surface of $D_5$, and when the average pore diameter $D_i$ satisfies (b), the separation membrane has a dense layer on the surface of $D_1$, so that defects of the dense layer can be prevented and low leakage can be achieved. When the separation membrane has a hollow fiber shape, the dense layer is more preferably provided on the outer surface of the separation membrane. When the dense layer is provided on the outer surface of the separation membrane, the effective membrane area per unit volume of the module can be increased.

The dense layer refers to a portion of the separation membrane observed at a magnification of 10,000 times using a scanning electron microscope (SEM), the dense layer extending until first reaching a pore exceeding 10 nm when a straight line is drawn perpendicular to the outer surface from any point on the outer surface of the separation membrane toward the inner surface side or from the inner surface toward the outer surface. For example, the dense layer can be obtained by applying stress to the separation membrane sufficiently cooled in liquid nitrogen (using a razor, a microtome, or a broad ion beam as necessary), observing a transverse cross section or a longitudinal cross section of the separation membrane using a scanning electron microscope (SEM), binarizing the obtained image using image analysis software "ImageJ", extracting only pores larger than 10 nm, drawing a straight line perpendicular from the outer surface, and measuring the distance to the pores, and a specific measurement method will be described in detail in Examples.

The thickness of the dense layer is preferably 0.1 $\mu$m to 2.0 $\mu$m. When the thickness of the dense layer is 0.1 $\mu$m or more, the low leakage is improved, and when the thickness is 2.0 $\mu$m or less, the permeability is improved.

The thickness of the dense layer is more preferably 0.1 $\mu$m to 1.5 $\mu$m. The thickness of the dense layer is still more preferably 0.1 $\mu$m to 1.0 $\mu$m, and particularly preferably 0.1 $\mu$m to 0.4 $\mu$m.

(Void Larger than 10 $\mu$m in Support Layer)

In the separation membrane according to the present embodiment, the number of voids larger than 10 $\mu$m in the support layer is preferably three or less. The support layer is a layer excluding the dense layer in the separation membrane, and has a plurality of voids. The void refers to a recess having a diameter of 10 nm or more when the support layer in the transverse cross section or the longitudinal cross section of the separation membrane is observed at a magnification of 2,000 times using a scanning electron microscope (hereinafter, referred to as "SEM"). Further, the plurality of voids refers to 10 or more voids per visual field in a case in which the support layer in the transverse cross section or the longitudinal cross section is observed at a magnification of 2,000 times using the SEM. When the number of voids larger than 10 $\mu$m in the support layer is three or less, the strength of the separation membrane is improved. The number of voids of 10 $\mu$m or more in the support layer can be obtained by applying stress to the separation membrane sufficiently cooled in liquid nitrogen (using a razor, a microtome, or a broad ion beam as necessary), observing a transverse cross section or a longitudinal cross section using a scanning electron microscope (SEM), binarizing the obtained image using image analysis software "ImageJ", and then extracting only pores having an average diameter of larger than 10 $\mu$m. The number of voids larger than 10 $\mu$m in the support layer is more preferably two or less, still more preferably one or less, and particularly preferably zero. A measurement method for the void larger than 10 $\mu$m in the support layer will be described in detail in Examples.

(Average Aperture Ratio of Cross Section)

The average aperture ratio of the cross section in the present embodiment is preferably 25% to 50%. The average aperture ratio of the cross section can be obtained by applying stress to the separation membrane sufficiently cooled in liquid nitrogen (using a razor, a microtome, or a broad ion beam as necessary) to expose a transverse cross section or a longitudinal cross section, observing the cross section using a scanning electron microscope (SEM), binarizing the obtained image using image analysis software "ImageJ", and calculating the ratio of the area of pores having an average diameter larger than 10 nm with respect to the visual field area. When the average aperture ratio of the cross section is 25% or more, the permeability is improved, and when the average aperture ratio is 50% or less, the strength of the separation membrane is improved. The average aperture ratio of the cross section is preferably 30% to 45%, and more preferably 35% to 40%. A specific measurement method for the average aperture ratio of the cross section will be described in detail in Examples.

(Gas Permeability)

The separation membrane according to the present embodiment preferably has a $N_2$ permeability of 5 GPU to 400 GPU at a differential pressure of 100 kPa and 37°C. The differential pressure of 100 kPa means that a pressure difference between the gas supply side and the gas permeation side of the separation membrane is 100 kPa. Since the higher the gas permeability, the higher the separation efficiency per unit area, a lower limit of the $N_2$ permeability is preferably 5 GPU or more, more preferably 10 GPU or more, even more preferably 20 GPU or more, still more preferably 30 GPU or more, and particularly preferably 40 GPU or more. Meanwhile, an upper limit of the $N_2$ permeability is preferably 400 GPU or less, more preferably 300 GPU or less, even more preferably 250 GPU or less, still more preferably 200 GPU or less, and particularly preferably 150 GPU or less. When the $N_2$ permeability is the above upper limit or less, pores or defects present in the dense layer are reduced, and such a separation membrane can achieve more excellent low leakage. A calculation method for the $N_2$ permeability will be described in detail in Examples.

(Separation Coefficient $\beta$ ($CO_2/N_2$))

The dense layer in the present embodiment is non-porous and therefore has a very long leakage time, and since the dense layer is non-porous, gas permeation is performed by a dissolution-diffusion mechanism. Meanwhile, a porous structure has through pores and therefore has a short leakage time, and the gas permeates by Knudsen diffusion. That is, the denseness of the dense layer can be evaluated by a gas separation coefficient, and the leakage time tends to be long in a membrane having high denseness.

In general, permeation through a polymer membrane depends on a pore size in the membrane. In a membrane in which a maximum pore diameter of the dense layer is 3 nm or less, the gas permeates by the dissolution-diffusion mechanism. In this case, the separation coefficient $\beta$ indicating the ratio of the permeation coefficient P or the permeation flow rate Q of the two gases depends only on the polymer material and does not depend on the thickness of the dense layer. Therefore, for example, the gas separation coefficient $\beta$ ($CO_2/N_2$) for $CO_2$ and $N_2$ can be expressed as $P(CO_2)/P(N_2)$ or $Q(CO_2)/Q(N_2)$. In a polymer generally used, at least one $\beta$ ($CO_2/N_2$) value is generated.

Meanwhile, in a porous membrane having pores with a size of 3 nm to 10 $\mu$m, gas permeates mainly by "Knudsen diffusion". In this case, the gas separation coefficient $\beta$ is obtained by the square root of the molecular weight ratio of the gas. Therefore, $\beta$ ($CO_2/N_2$) is $\sqrt{28/44} = 0.80$. The Knudsen diffusion may cause leakage, and $\beta$ ($CO_2/N_2$) is preferably 1 or more because the leakage is less likely to occur.

When the gas permeates a membrane having the microporous support structure and the dense layer having a defect, the apparent permeation flow rate increases on one hand, but the gas separation coefficient decreases on the other hand. The defect mentioned here is a pore having a size of 3 nm or more on the surface of the dense layer. Therefore, the presence or absence of pores or defects in the dense layer of the membrane according to the present embodiment can be read by the gas separation coefficient $\beta$ ($CO_2/N_2$) measured for $CO_2$ and $N_2$. When the gas separation coefficient $\beta$ ($CO_2/N_2$) is smaller than 1, this membrane has a large number of pores or defects in the dense layer. When a large number of pores or defects are present in the dense layer, liquid leakage or plasma leakage occurs too early, and this membrane is not suitable for long term use. Similarly, such a membrane cannot be used in a gas separation region. In contrast, when the gas separation coefficient $\beta$ ($CO_2/N_2$) is 1.0 or more, the membrane achieves low leakage. In particular, in a case of a thin membrane having a dense layer thickness of 0.1 $\mu$m to 2.0 $\mu$m as described above, the separation coefficient $\beta$ ($CO_2/N_2$) is 5.0 or more, and the low leakage is improved.

In order to achieve low leakage while maintaining high gas permeability, the gas separation coefficient $\beta$ ($CO_2/N_2$) of the membrane according to the present embodiment is preferably 5.0 to 100.0. A lower limit of the gas separation coefficient $\beta$ ($CO_2/N_2$) is preferably 5.0 or more, more preferably 7.0 or more, even more preferably 8.0 or more, still more preferably 9.0 or more, and particularly preferably 10.0 or more. Meanwhile, an upper limit of the gas separation coefficient $\beta$ ($CO_2/N_2$) is preferably 100.0 or less, more preferably 50.0 or less, even more preferably 30.0 or less, still more preferably 20.0 or less, and particularly preferably 15.0 or less. When the gas separation coefficient $\beta$ ($CO_2/N_2$) is at the above upper limit or less, the dense layer has appropriate micropores, and such a separation membrane can achieve high gas permeability while maintaining excellent low leakage. A specific measurement method for the gas separation coefficient $\beta$ ($CO_2/N_2$) will be described in detail in Examples.

In the present specification, the gas separation coefficient $\beta$ ($CO_2/N_2$) is also referred to as "separation coefficient $\beta$ ($CO_2/N_2$)".

(Method for Manufacturing Separation Membrane)

A method for manufacturing the separation membrane according to the present embodiment includes the following (1) and (2):

(1) a preparation step of melt-kneading a mixture containing 10 mass% or more and 50 mass% or less of poly (4-methyl-1-pentene) and 50 mass% or more and 90 mass% or less of a plasticizer to obtain a resin composition; and
(2) a forming step of ejecting the resin composition from an ejection die, exhausting a volatilized plasticizer at a wind speed of 8 m/s to 20 m/s, and then immersing the resin composition in a cooling bath using a solvent having a solubility parameter distance Ra for poly (4-methyl-1-pentene) in a range of 5.0 $MPa^{1/2}$ or more and 18 $MPa^{1/2}$ or less and a solubility parameter distance Rb for the plasticizer in a range of 1.0 $MPa^{1/2}$ or more and 2.9 $MPa^{1/2}$ or less or 6.5 $MPa^{1/2}$ or more and 10.0 $MPa^{1/2}$ or less, followed by winding.

Next, the method for manufacturing the separation membrane according to the present embodiment will be specifically described by taking a case in which the separation membrane is a hollow fiber membrane as an example.

(Preparation Step)

In the preparation step of obtaining the resin composition for manufacturing the separation membrane according to the present embodiment, a mixture containing 10 mass% to 50 mass% of PMP and 50 mass% to 90 mass% of the plasticizer is melt-kneaded. The mixture preferably contains 15 mass% to 50 mass% of PMP and 50 mass% to 85 mass% of the plasticizer, more preferably contains 20 mass% to 45 mass% of PMP and 55 mass% to 80 mass% of the plasticizer, and particularly preferably contains 25 mass% to 40 mass% of PMP and 60 mass% to 75 mass% of the plasticizer.

As a device used for melt-kneading the mixture, a kneader, a roll mill, a Banbury mixer, or a mixer such as a single-screw extruder or twin-screw extruder may be used. Among them, from the viewpoint of improving the uniform dispersibility of the plasticizer, the use of the twin-screw extruder is preferable, and from the viewpoint of removing volatile substances such as moisture and low molecular weight substances, the use of a twin-screw extruder with vent pores is more preferable. In addition, from the viewpoint of increasing the kneading strength and improving the uniform dispersibility of the plasticizer, it is preferable to use a twin-screw extruder including a screw having a kneading disk portion.

The resin composition obtained in the preparation step may be once pelletized, melted again, and used for melt membrane formation, or may be directly guided to a die and used for melt membrane formation. When the resin composition is once pelletized, it is preferable to use pellets dried to a moisture content of 200 ppm (mass reference) or less. When the moisture content is 200 ppm (mass reference) or less, deterioration of the resin can be prevented.

(Forming Step)

In the forming step of the hollow fiber membrane, phase separation is used to obtain the hollow fiber membrane from a molten mixture of PMP and the plasticizer, that is, from the resin composition. Specifically, the forming step is a step of ejecting the resin composition obtained in the preparation step into a gas atmosphere from, for example, an ejection die having a double annular nozzle in which a gas flow path is disposed at the center, introducing the resin composition into a cooling bath, and phase-separating the resin composition to obtain a resin formed product.

As a specific method, a hollow portion forming gas is ejected from an inner ring of the double-tube die while ejecting the resin composition in a molten state from an outer tube of the double annular nozzle for spinning. The ejected resin composition is allowed to travel in a gas atmosphere and then cooled and solidified in a cooling bath to obtain the resin formed product.

Here, the cooling bath for cooling the resin composition ejected from the ejection die will be described. It is important to select the solvent of the cooling bath in view of the affinity with PMP and the plasticizer. As the solvent of the cooling bath, it is important to use a solvent having a solubility parameter distance Ra for PMP of 5.0 MPa$^{1/2}$ to 18.0 MPa$^{1/2}$ and a solubility parameter distance Rb for the plasticizer of 1.0 MPa$^{1/2}$ to 2.9 MPa$^{1/2}$ or 6.5 MPa$^{1/2}$ to 10.0 MPa$^{1/2}$ in the cooling bath. When Ra and Rb are within the above ranges, the size of the micropores in the dense layer can be controlled, and both high permeability and low leakage can be achieved. The reason for this is presumed to be that when Ra is in the range of 5.0 MPa$^{1/2}$ to 18.0 MPa$^{1/2}$, solidification occurs before crystallization of PMP, and when Rb is in the range of 1.0 MPa$^{1/2}$ to 2.9 MPa$^{1/2}$ or 6.5 MPa$^{1/2}$ to 10.0 MPa$^{1/2}$, the solvent and the plasticizer are exchanged at an appropriate rate, and micropores through which only gas can pass can be formed while preventing coarse pores that cause leakage of liquid. A solvent having Ra in a range of 5.0 MPa$^{1/2}$ to 7.0 MPa$^{1/2}$ and Rb in a range of 6.5 MPa$^{1/2}$ to 10.0 MPa$^{1/2}$ is more preferably used in the cooling bath.

The affinity between PMP and the solvent can be estimated by a three-dimensional Hansen solubility parameter as described in a document (Ind. Eng. Chem. Res. 2011, 50, 3798-3817.). Specifically, the smaller the solubility parameter distance (Ra) in the following Formula (3), the higher the affinity of the solvent for PMP.

[Math. 3]

$$\mathrm{Ra} = \sqrt{4(\delta_{Ad} - \delta_{Cd})^2 + \left(\delta_{Ap} - \delta_{Cp}\right)^2 + \left(\delta_{Ah} - \delta_{Ch}\right)^2} \quad \cdots \cdots \text{Formula (3)}$$

Here, $\delta_{Ad}$, $\delta_{Ap}$, and $\delta_{Ah}$ are the dispersion term, the polarity term, and the hydrogen bond term of the solubility parameter of PMP, respectively, and $\delta_{Cd}$, $\delta_{Cp}$, and $\delta_{Ch}$ are the dispersion term, the polarity term, and the hydrogen bond term of the solubility parameter of the solvent, respectively.

The affinity between the plasticizer and the cooling solvent can also be estimated in the same manner. Specifically, the smaller the solubility parameter distance (Rb) in the following Formula (4), the higher the affinity of the solvent for the plasticizer.

[Math. 4]

$$\mathrm{Rb} = \sqrt{4(\delta_{Bd} - \delta_{Cd})^2 + \left(\delta_{Bp} - \delta_{Cp}\right)^2 + \left(\delta_{Bh} - \delta_{Ch}\right)^2} \quad \cdots \cdots \text{Formula (4)}$$

Here, $\delta_{Bd}$, $\delta_{Bp}$, and $\delta_{Bh}$ are the dispersion term, the polarity term, and the hydrogen bond term of the solubility parameter of PMP, respectively, and $\delta_{Cd}$, $\delta_{Cp}$, and $\delta_{Ch}$ are the dispersion term, the polarity term, and the hydrogen bond term of the solubility parameter of the solvent, respectively.

When the solvent is a mixed solvent, the solubility parameter ($\delta_{Mixture}$) of the mixed solvent can be obtained by the following Formula (5).

[Math. 5]

$$\delta_{Mixture} = \sum \Phi_i \delta_i \quad \cdot \cdot \cdot \cdot \cdot \text{Formula (5)}$$

Here, $\varphi_i$ and $\delta_i$ are the volume fraction and the solubility parameter of the component i, and hold for the dispersion term, the polarity term, and the hydrogen bond term, respectively. Here, the "volume fraction of the component i" refers to the ratio of the volume of the component i before mixing to the sum of the volumes of all components before mixing. For the three-dimensional Hansen solubility parameter of the solvent, if any were described in a document (Ind. Eng. Chem. Res. 2011, 50, 3798-3817.), this value was used. For solvent parameters not described, the value stored in the software "Hansen Solubility Parameter in Practice" developed by Charles Hansen et al. was used. The three-dimensional Hansen solubility parameter of a solvent or a polymer, which is not described in the software, can be calculated by the Hansen sphere method using the software.

In the method for manufacturing the separation membrane according to the present embodiment, when dibutyl phthalate is used as the plasticizer, as the solvent used in the cooling bath in the forming step, cyclohexanone, diethyl phthalate, isophorone, dihexyl phthalate, Benzoflex (registered trademark) manufactured by Eastman Co., diisoheptyl phthalate, dimethyl phthalate, fatty acid methyl ester, n-butyl acetate, n-amyl acetate, triacetin, N,N-dimethylacetamide, butyl diglycol acetate, acetyl triethyl citrate, n-propyl acetate, dipropylene glycol mono-N-butyl ether, diethylene glycol monobutyl ether, t-butyl acetate, ethyl 3-ethoxypropionate, propylene glycol monomethyl ether acetate, diacetone alcohol, isopentyl acetate, tri-N-butyl citrate, Solvesso (registered trademark) 100 manufactured by Exxon Mobil Corporation, isobutyl isobutyrate, $\varepsilon$-caprolactone, propylene glycol phenyl ether, isopropyl acetate, sec-butyl acetate, propylene glycol monobutyl ether, texanol, Solvesso 150, ethylbenzene, $\gamma$-butyrolactone, tetrahydrofurfuryl alcohol, N,N-dimethylformamide, dipropylene glycol methyl ether, dipropylene glycol methyl ether, propylene glycol monomethyl ether, triethyl citrate, methyl carbitol, ethyl lactate, ethylene glycol monobutyl ether, cyclohexane, methylcyclohexane, dimethylcyclohexane, benzyl alcohol, and dimethyl sulfoxide are preferable, and among them, triacetin is more preferable because Ra and Rb are within the more preferable ranges described above.

The cooling bath used is preferably at 15°C to 45°C. When the temperature is 15°C or higher, a sudden temperature change is prevented, winding is stabilized, and a change in a yarn shape is reduced. Meanwhile, when the temperature is 45°C or lower, excessive crystallization can be prevented, and the permeability can be improved. The temperature of the cooling bath is preferably 15°C to 40°C, and more preferably from 25°C to 35°C.

In addition, it is important to perform exhausting at a wind speed of 8 m/s to 20 m/s in order to promote evaporation of the plasticizer before cooling with the cooling bath from at least one of the surfaces, preferably the surface on which the dense layer is to be formed of the resin composition ejected from the ejection die. Since the evaporated plasticizer is immediately exhausted by exhausting at a wind speed of 8 m/s or more, it is possible to prevent the plasticizer from being liquefied while adhering to the membrane surface and causing defects, and to form a dense layer having appropriate micropores when cooled in the cooling bath described above. Meanwhile, when the wind speed is 20 m/s or less, yarn breakage due to shaking of the resin composition can be prevented. The exhaust air volume is preferably 8 m/s to 17 m/s, and more preferably 10 m/s to 14 m/s. A gas used for the gaseous atmosphere of the exhaust portion is not particularly limited, but air or nitrogen is preferably used. The gaseous atmosphere generally has a temperature lower than the temperature of the ejection die.

Further, it is preferable that the resin composition ejected from the ejection die is introduced into the cooling bath after passing through an air gap where a distance from a die surface to a solvent surface is 30 mm to 80 mm. By passing through the air gap of 30 mm to 80 mm, the dense layer thickness is improved. The air gap refers to a space from the die surface to the solvent surface of the cooling bath. In the present specification, the "distance from a die surface to a solvent surface" may be referred to as an "air gap distance".

The air gap distance is preferably 30 mm to 70 mm, more preferably 35 mm to 60 mm, and particularly preferably 40 mm to 50 mm.

In the forming step of manufacturing the separation membrane according to the present embodiment, the resin composition ejected from the ejection die is wound by a winding device. In this case, the value of the draft ratio calculated by (winding speed) implemented by the winding device/(ejection speed from ejection die) is preferably 3.0 to 20.0. When the draft ratio is 3.0 or more, the winding is stabilized, and the variation in the yarn shape is reduced. By setting the draft ratio to 20.0 or less, excessive stretching of the resin composition ejected from the die can be prevented, and leakage due to the occurrence of defects in the dense layer can be prevented. The draft ratio is preferably 3.0 to 10.0, and more preferably 4.5 to 8.0.

(Washing Step)

By immersing the resin composition thus obtained in a solvent that does not dissolve the polymer but is miscible with the plasticizer, the porosity can be increased through the step of eluting the plasticizer. At this time, by using a solvent or a mixed solvent having an appropriate affinity with the plasticizer, good solvent exchange is performed, and washing efficiency is increased. The solvent is not particularly limited as long as the solvent does not dissolve the polymer but is miscible with the plasticizer, and specific examples thereof include methanol, ethanol, isopropanol, and acetone.

(Drying Step)

The resin composition after the washing step is preferably subjected to a drying step for the purpose of removing the solvent attached in the washing step. The drying is preferably performed at a temperature at which the polymer is not dissolved but the solvent miscible with the plasticizer is vaporized and removed, and specifically, the drying is preferably performed at room temperature to 150°C.

Thus, the separation membrane according to the present embodiment containing PMP as a main component can be manufactured.

(Module)

The separation membrane according to the present embodiment obtained as described above may be filled into a case by a conventional known method to form a membrane module for at least one of deaeration and aeration. For example, a hollow fiber membrane module includes a plurality of hollow fiber membranes and a tubular case. The plurality of hollow fiber membranes are bundled and inserted into the tubular case, and then end portions thereof are fixed and sealed to the case with a thermosetting resin such as polyurethane or epoxy resin. An end portion of the hollow fiber membrane cured with the thermosetting resin is cut to obtain an opening surface of the hollow fiber membrane, thereby manufacturing a module.

A liquid to be treated by the "membrane module for at least one of deaeration and aeration" according to the present embodiment is water, an organic solvent, or a mixture thereof, and blood is not a target. The liquid may contain a hydrocarbon solvent.

The liquid may be at least one selected from the group consisting of glycols, glycol monoalkyl ethers, glycol dialkyl ethers, glycol monoacetates, glycol diacetates, alcohols, ketones, acetic esters, lactic esters, saturated hydrocarbons, unsaturated hydrocarbons, cyclic saturated hydrocarbons, cyclic unsaturated hydrocarbons, aromatic hydrocarbons, terpenes, ethers, cyclic imides, 3-alkyl-2-oxazolidinone, N-alkylpyrrolidones, lactones, and nitrogen-containing solvents.

The liquid may be UV ink or ceramic ink.

(Device for at least one of deaeration and aeration)

By using the separation membrane according to the present embodiment, it is possible to provide a device for at least one of deaeration and aeration, which includes the membrane module for at least one of deaeration and aeration according to the present embodiment.

(Method for Producing Liquid)

It is possible to provide a method for producing a liquid, which includes at least one of removing a dissolved gas and applying a gas using a device for at least one of deaeration and aeration including the membrane module for at least one of deaeration and aeration according to the present embodiment using the separation membrane according to the present embodiment.

Examples

The present invention will be specifically described below with reference to Examples, but the present invention is not limited thereto in any way.

[Measurement and Evaluation Method]

Each characteristic value in the examples is obtained by the following method.

(1) Outer Diameter and Inner Diameter (μm) of Hollow Fiber Membrane

After the hollow fiber membrane was frozen with liquid nitrogen, stress was applied (using a razor or a microtome as necessary), an exposed radial cross section was observed with an optical microscope, and average values of the outer diameter and the inner diameter at randomly selected 10 positions were taken as the outer diameter and the inner diameter of the hollow fiber membrane, respectively.

(2) Hollowness Ratio (%) of Hollow Fiber Membrane

The hollowness ratio of the hollow fiber membrane was calculated based on the outer diameter and the inner diameter obtained in the above (1) by the following formula.

$$\text{Hollowness ratio (\%)} = 100 \times [\text{inner diameter (μm)}]^2/[\text{outer diameter (μm)}]^2$$

(3) Gas Permeability (GPU)

A small module having an effective length of 100 mm and including three hollow fiber membranes was manufactured. Specifically, three hollow fiber membranes were bundled and inserted into a plastic pipe which is a tubular case, and then a gap between the membranes and a gap between the pipe and the hollow fiber membranes at an end portion of the bundle of hollow fiber membranes were sealed by curing with a thermosetting resin. An opening surface of the hollow fiber membrane was obtained by cutting an end portion of the sealed hollow fiber membrane, and the small module for evaluation was manufactured. The gas permeation flow rate was measured using this small module. Carbon dioxide, nitrogen, and helium were individually used as measurement gases for evaluation, and a pressure change on a permeation side per unit time of carbon dioxide, nitrogen, or helium was measured by an external pressure method in accordance with the pressure sensor method of JIS K7126-1 (2006). Here, the pressure difference between the supply side and the permeation side was set to 100 kPa. The pressure difference (differential pressure) of 100 kPa means that a pressure difference between the gas supply side and the gas permeation side of the separation membrane is 100 kPa. The temperature of the gas was 37°C.

Subsequently, the gas permeation flow rate Q was calculated by the following Formula (6), and the value was defined as the gas permeability. As described above, J is a gas flux, and $P_H$ and $P_L$ are partial pressures on the gas supply side and the gas permeation side, respectively. The GPU is a general unit indicating the gas permeation flow rate Q, and 1 GPU = $3.35 \times 10^{-10}$ mol/m$^2$·s·Pa. The ratio of the gas permeation flow rate Q of each component was defined as the separation coefficient β. A membrane area was calculated based on the outer diameter and length in a region contributing to gas permeation.

[Math. 6]

$$Q[GPU] = \frac{J}{3.35 \times 10^{-10}(P_H - P_L)} \quad \cdots \cdots \text{Formula (6)}$$

(4) Average Pore Diameter (nm) Converted from NKP Plot

The gas permeabilities of $N_2$ and He were calculated by the method described in the above (3), and the separation coefficient β ($N_2$/He), which is the ratio between $N_2$ and He, was determined. This value was substituted into the above Formula (1) to determine the average pore diameter. In the formula used for the calculation this time, when the separation coefficient β ($N_2$/He) is low, specifically, when β (N2/He) is 2.7 or less, the solution does not converge, and thus the measurement is not possible.

(5) Dense Layer Thickness (μm)

As in the above (1), after the separation membrane was frozen with liquid nitrogen, stress was applied (using a razor, a microtome, or a broad ion beam as necessary) to fracture the separation membrane so that the radial cross section was exposed. Subsequently, in a case in which sputtering was performed with platinum under the following conditions to perform pretreatment on the radial cross section and then observation was performed at a magnification of 10,000 times using an SEM, a length until a pore exceeding 10 nm was first reached when a straight line was drawn perpendicularly to the outer surface of the separation membrane from any point on the outer surface toward the inner surface side was defined as the dense layer thickness. The extraction of the pores is performed after an analysis image is binarized in the image analysis software "ImageJ". Binarization was performed in accordance with a point having a smaller luminance among two luminance points having the number of pixels of $(1/2) \times A$, where A is the number of pixels at the luminance having the highest number of pixels in a distribution of the number of pixels in which the horizontal axis represents the luminance in the analysis image and the vertical axis represents the number of pixels at the corresponding luminance. Further, an image obtained by performing noise removal (corresponding to Despeckle in ImageJ) once on the obtained binarized image to replace all pixels with a central value of $3 \times 3$ pixels near the pixel is used as the analysis image. A line perpendicular to the outer surface was drawn from any point on the outer surface of the obtained image toward the inner surface side, and the length until a pore exceeding 10 nm was first reached was calculated. The measurement was performed at arbitrary 10 positions, and an average value thereof was adopted as the dense layer thickness.

(Sputtering)

Device: manufactured by Hitachi High-Technologies Corporation (E-1010)
Deposition time: 40 seconds
Current value: 20 mA

(SEM)

Device: manufactured by Hitachi High-Technologies Corporation (SU1510)
Acceleration voltage: 5 kV
Probe current: 30 pA

(6) Voids Larger than 10 $\mu$m in Support Layer

After the separation membrane was frozen with liquid nitrogen as in the above (1), stress was applied (using a razor, a microtome, or a broad ion beam as necessary) to fracture the separation membrane so that the radial cross section was exposed. Subsequently, sputtering was performed with platinum under the following conditions to perform pretreatment on the radial cross section, and then all pores having a diameter larger than 10 $\mu$m, that is, pores having an area larger than 78.5 $\mu$m$^2$ when observation was performed at a magnification of 2,000 times using an SEM were extracted, and the number of the pores was calculated to obtain the average pore diameter of the support layer. The extraction of the pores is performed after an analysis image is binarized (Huang binarization) in the image analysis software "ImageJ". Further, an image obtained by performing noise removal (corresponding to Despeckle in ImageJ) once on the obtained binarized image to replace all pixels with a central value of 3 $\times$ 3 pixels near the pixel is used as the analysis image. The extraction of the pores was performed by the Analyze Particles command of ImageJ, and the number of the obtained pores was calculated. The measurement was performed at arbitrary five positions, and the average value thereof was adopted as the void larger than 10 $\mu$m in the support layer.

(Sputtering)

Device: manufactured by Hitachi High-Technologies Corporation (E-1010)
Deposition time: 40 seconds
Current value: 20 mA

(SEM)

Device: manufactured by Hitachi High-Technologies Corporation (SU1510)
Acceleration voltage: 5 kV
Probe current: 30 pA

(7) Porosity (%)

The fiber length L (mm) and the mass M (g) of the hollow fiber membrane dried in vacuum at 25°C for 8 hours were measured. The density $\rho_1$ (g/mm$^3$) of the hollow fiber membrane was calculated from the following formula using the values of the outer diameter (mm) and the inner diameter (mm) measured in the above (1).

$$\rho_1 = M/[\pi \times \{(\text{outer diameter}/2)^2 - (\text{inner diameter}/2)^2\} \times L]$$

The porosity $\varepsilon$ (%) was calculated from the following formula.

$$\varepsilon = 1 - \rho_1/\rho_2$$

Here, $\rho_2$ is the density of the polymer.

(8) Average Aperture Ratio (%) of Cross Section

After the separation membrane was frozen with liquid nitrogen as in the above (1), stress was applied (using a razor, a microtome, or a broad ion beam as necessary) to fracture the separation membrane so that the radial cross section was exposed. Subsequently, sputtering was performed with platinum under the following conditions to perform pretreatment on the radial cross section, and observation was performed at a magnification of 10,000 times using an SEM, and then the ratio of the area of pores having an average diameter larger than 10 nm to a visual field area was calculated. The extraction of the pores is performed after an analysis image is binarized (Huang binarization) in the image analysis software "ImageJ". Further, an image obtained by performing noise removal (corresponding to Despeckle in ImageJ) once on the obtained binarized image to replace all pixels with a central value of $3 \times 3$ pixels near the pixel is used as the analysis image. The extraction of the pores was performed by the Analyze Particles command of ImageJ, and the ratio of the obtained total area of the pores to the visual field area was calculated as the aperture ratio. The measurement was performed at arbitrary five positions, and an average value thereof was defined as the average aperture ratio of the cross section.

(9) Average Pore Diameter $D_i$ (nm)

After the separation membrane was frozen with liquid nitrogen as in the above (1), stress was applied (using a razor, a microtome, or a broad ion beam as necessary) to fracture the separation membrane so that the radial cross section was exposed. Subsequently, sputtering was performed with platinum under the following conditions to perform pretreatment on the radial cross section, and observation was performed at a magnification of 10,000 times using an SEM, and then pores having an average diameter larger than 10 nm were extracted with respect to a visual field area. The extraction of the pores is performed after an analysis image is binarized (Huang binarization) in the image analysis software "ImageJ". Further, an image obtained by performing noise removal (corresponding to Despeckle in ImageJ) once on the obtained binarized image to replace all pixels with a central value of $3 \times 3$ pixels near the pixel is used as the analysis image. The extraction of pores was performed by the Analyze Particles command of ImageJ, and the average pore diameter was calculated from the average area of the obtained pores. The measurement was performed on five regions obtained by sequentially dividing the separation membrane into five regions at equal intervals in the thickness direction so that the respective surfaces of the separation membrane were end portions, and the average pore diameter of each region was sequentially defined as $D_1$ to $D_5$ from one side surface. In addition, for the five regions described above, the standard deviation of the pore diameters was divided by the arithmetic mean of the pore diameters and multiplied by 100 to obtain the variation coefficient.

[PMP]

The following PMP was prepared.
PMP: TPX DX845 (density: 833 kg/m$^3$, MFR: 9.0 g/10 min)

[Other Raw Materials]

Plasticizer: dibutyl phthalate

(Example 1)

35 mass% of PMP and 65 mass% of dibutyl phthalate were supplied to a twin-screw extruder, melt-kneaded at 290°C, and then introduced into a melt spinning pack having a spinning temperature of 245°C, and spun below an outer annular portion of an ejection die having one hole of die pore (double round tube type, ejection pore diameter: 2.0 mm). The spun hollow fiber was introduced into a triacetin cooling bath at 30°C and wound with a winder so that the draft ratio was 5.0. At this time, the air gap distance was set to 20 mm, and exhaust was performed at an air volume of 11 m/s from the ejection to the cooling bath. Here, as a filter in the melt spinning pack, a metal filter having a diameter of 200 $\mu$m was used. The

wound hollow fiber was immersed in isopropanol for 24 hours, and vacuum dried at room temperature to remove isopropanol, thereby obtaining a hollow fiber membrane. The physical properties of the obtained hollow fiber membrane are shown in Tables 1 and 2. In the obtained hollow fiber membrane, the average pore diameter converted from the NKP plot was 0.50 nm, the porosity was 55%, and the pore diameter variation coefficients in each region were 78% for $\alpha_1$, 76% for $\alpha_2$, 80% for $\alpha_3$, 73% for $\alpha_4$, and 96% for $\alpha_5$, and were 150% or less in all regions. In addition, the $N_2$ permeability was 42 GPU, the separation coefficient $\beta$ ($CO_2/N_2$) was 10.3, the permeability was excellent, the low leakage was achieved.

(Example 2)

A hollow fiber membrane was obtained in the same manner as in Example 1 except that dimethyl phthalate was used for the cooling bath. As a result, as shown in Tables 1 and 2, the average pore diameter converted from the NKP plot was 0.90 nm, the porosity was 42%, and the pore diameter variation coefficients in each region were 122% for $\alpha_1$, 128% for $\alpha_2$, 112% for $\alpha_3$, 133% for $\alpha_4$, and 142% for $\alpha_5$, and were 150% or less in all regions. The $N_2$ permeability was 38 GPU, and the separation coefficient $\beta$ ($CO_2/N_2$) was 5.2.

(Example 3)

A hollow fiber membrane was obtained in the same manner as in Example 1 except that $\gamma$-butyrolactone was used for the cooling bath. As a result, as shown in Tables 1 and 2, the average pore diameter converted from the NKP plot was 0.56 nm, the porosity was 48%, and the pore diameter variation coefficients in each region were 63% for $\alpha_1$, 75% for $\alpha_2$, 75% for $\alpha_3$, 91% for $\alpha_4$, and 80% for $\alpha_5$, and were 150% or less in all regions. The $N_2$ permeability was 47 GPU, and the separation coefficient $\beta$ ($CO_2/N_2$) was 7.7.

(Example 4)

A hollow fiber membrane was obtained in the same manner as in Example 1 except that the cooling bath temperature was changed to 41°C. As a result, as shown in Tables 1 and 2, the average pore diameter converted from the NKP plot was 0.36 nm, the porosity was 47%, and the pore diameter variation coefficients in each region were 99% for $\alpha_1$, 87% for $\alpha_2$, 84% for $\alpha_3$, 88% for $\alpha_4$, and 76% for $\alpha_5$, and were 150% or less in all regions. The $N_2$ permeability was 22 GPU, and the separation coefficient $\beta$ ($CO_2/N_2$) was 12.1.

(Example 5)

A hollow fiber membrane was obtained in the same manner as in Example 1 except that the cooling bath temperature was changed to 17°C. As a result, as shown in Tables 1 and 2, the average pore diameter converted from the NKP plot was 0.54 nm, the porosity was 54%, and the pore diameter variation coefficients in each region were 92% for $\alpha_1$, 76% for $\alpha_2$, 87% for $\alpha_3$, 96% for $\alpha_4$, and 85% for $\alpha_5$, and were 150% or less in all regions. The $N_2$ permeability was 39 GPU, and the separation coefficient $\beta$ ($CO_2/N_2$) was 10.2.

(Example 6)

A hollow fiber membrane was obtained in the same manner as in Example 1 except that PMP was 48 mass%, dibutyl phthalate was 52 mass%, and the draft ratio was 18.0. As a result, as shown in Tables 1 and 2, the average pore diameter converted from the NKP plot was 0.29 nm, the porosity was 42%, and the pore diameter variation coefficients in each region were 121% for $\alpha_1$, 139% for $\alpha_2$, 102% for $\alpha_3$, 98% for $\alpha_4$, and 101% for $\alpha_5$, and were 150% or less in all regions. The $N_2$ permeability was 7 GPU, and the separation coefficient $\beta$ ($CO_2/N_2$) was 9.7.

(Example 7)

A hollow fiber membrane was obtained in the same manner as in Example 1 except that the draft ratio was 3.5. As a result, as shown in Tables 1 and 2, the average pore diameter converted from the NKP plot was 0.59 nm, the porosity was 47%, and the pore diameter variation coefficients in each region were 101% for $\alpha_1$, 79% for $\alpha_2$, 108% for $\alpha_3$, 99% for $\alpha_4$, and 96% for $\alpha_5$, and were 150% or less in all regions. The $N_2$ permeability was 60 GPU, and the separation coefficient $\beta$ ($CO_2/N_2$) was 8.6.

(Example 8)

A hollow fiber membrane was obtained in the same manner as in Example 1 except that the exhaust air volume was 18 m/s. As a result, as shown in Tables 3 and 4, the average pore diameter converted from the NKP plot was 0.47 nm, the porosity was 54%, and the pore diameter variation coefficients in each region were 78% for $\alpha_1$, 66% for $\alpha_2$, 106% for $\alpha_3$, 86% for $\alpha_4$, and 70% for $\alpha_5$, and were 150% or less in all regions. The $N_2$ permeability was 31 GPU, and the separation coefficient $\beta$ ($CO_2/N_2$) was 10.4.

(Example 9)

A hollow fiber membrane was obtained in the same manner as in Example 1 except that benzyl alcohol was used for the cooling bath. As a result, as shown in Tables 3 and 4, the average pore diameter converted from the NKP plot was 0.72 nm, the porosity was 49%, and the pore diameter variation coefficients in each region were 131% for $\alpha_1$, 109% for $\alpha_2$, 111% for $\alpha_3$, 97% for $\alpha_4$, and 86% for $\alpha_5$, and were 150% or less in all regions. The $N_2$ permeability was 55 GPU, and the separation coefficient $\beta$ ($CO_2/N_2$) was 6.1.

(Example 10)

A hollow fiber membrane was obtained in the same manner as in Example 1 except that the exhaust air volume was 8 m/s. As a result, as shown in Tables 3 and 4, the average pore diameter converted from the NKP plot was 0.76 nm, the porosity was 56%, and the pore diameter variation coefficients in each region were 75% for $\alpha_1$, 77% for $\alpha_2$, 82% for $\alpha_3$, 81% for $\alpha_4$, and 102% for $\alpha_5$, and were 150% or less in all regions. The $N_2$ permeability was 128 GPU, and the separation coefficient $\beta$ ($CO_2/N_2$) was 5.3.

(Comparative Example 1)

A hollow fiber membrane was obtained in the same manner as in Example 1 except that the exhaust air volume was 0 m/s and the draft ratio was 231.0. As a result, as shown in Tables 3 and 4, the pore diameter variation coefficients in each region were 228% for $\alpha_1$ and 178% for $\alpha_4$, which were 150% or more, and the separation coefficient $\beta$ ($CO_2/N_2$) was as low as 1.2.

(Comparative Example 2)

A hollow fiber membrane was obtained in the same manner as in Example 1 except that N-methylpyrrolidone was used for the cooling bath. As a result, as shown in Tables 3 and 4, a pore-opening was confirmed on the membrane surface using an SEM, the pore diameter was unmeasurable using the NKP plot, and the separation coefficient $\beta$ ($CO_2/N_2$) was as low as 0.8.

(Comparative Example 3)

A hollow fiber membrane was obtained in the same manner as in Example 1 except that spinning was performed with 100 mass% of PMP and a draft ratio of 700.0, and air cooling was performed with an exhaust air volume of 30 m/s. As a result, as shown in Tables 3 and 4, the porosity was 18%, and the $N_2$ permeability was as low as 3 GPU.

(Comparative Example 4)

A hollow fiber membrane was obtained in the same manner as in Example 1 except that spinning was performed with 100 mass% of PMP and a draft ratio of 1000.0, and air cooling was performed with an exhaust air volume of 0 m/s. As a result, as shown in Tables 3 and 4, a pore-opening was confirmed on the membrane surface using an SEM, the pore diameter was unmeasurable using the NKP plot, and the separation coefficient $\beta$ ($CO_2/N_2$) was as low as 0.9.

(Comparative Example 5)

As a result of the same procedure as in Example 1 except that PMP was 8 mass% and dibutyl phthalate was 92 mass%, spinning was not possible due to yarn breakage.

(Comparative Example 6)

A hollow fiber membrane was obtained in the same manner as in Example 1 except that the exhaust air volume was 6 m/s. As a result, as shown in Tables 3 and 4, the average pore diameter converted from the NKP plot was 2.50 nm, which was 1.00 nm or more, and the separation coefficient $\beta$ ($CO_2/N_2$) was as low as 3.0.

[Table 1]

| | | Ex. 1 | Ex. 2 | Ex. 3 | Ex. 4 |
|---|---|---|---|---|---|
| PMP | [wt%] | 35 | 35 | 35 | 35 |
| Plasticizer | [wt%] | 65 | 65 | 65 | 65 |
| Plasticizer type | [-] | Dibutyl phthalate | Dibutyl phthalate | Dibutyl phthalate | Dibutyl phthalate |
| Exhaust air volume | [m/s] | 11 | 11 | 11 | 11 |
| Cooling bath type | [-] | Triacetin | Dimethyl phthalate | $\gamma$-butyrolactone | Triacetin |
| Solubility parameter distance Rb between plasticizer and cooling bath | [Mpa$^{1/2}$] | 6.9 | 2.8 | 8.7 | 6.9 |
| Solubility parameter distance Ra between PMP and cooling bath | [Mpa$^{1/2}$] | 6.2 | 9.5 | 15.3 | 6.2 |
| Cooling bath temperature | [°C] | 30 | 30 | 30 | 41 |
| Draft ratio | [-] | 5.0 | 5.0 | 5.0 | 5.0 |
| Cleaning solvent type Main component | [-] [-] | Isopropanol PMP | Isopropanol PMP | Isopropanol PMP | Isopropanol PMP |
| Presence of dense layer | [-] | Yes | Yes | Yes | Yes |
| Average pore diameter converted from NKP plot | [nm] | 0.50 | 0.90 | 0.56 | 0.36 |
| Porosity | [%] | 55 | 42 | 48 | 47 |
| Average aperture ratio of cross section | [%] | 38.7 | 47.6 | 34.9 | 35.2 |

| | | Ex. 5 | Ex. 6 | Ex. 7 |
|---|---|---|---|---|
| PMP | [wt%] | 35 | 48 | 35 |
| Plasticizer | [wt%] | 65 | 52 | 65 |
| Plasticizer type | [-] | Dibutyl phthalate | Dibutyl phthalate | Dibutyl phthalate |
| Exhaust air volume | [m/s] | 11 | 11 | 11 |
| Cooling bath type | [-] | Triacetin | Triacetin | Triacetin |
| Solubility parameter distance Rb between plasticizer and cooling bath | [Mpa$^{1/2}$] | 6.9 | 6.9 | 6.9 |
| Solubility parameter distance Ra between PMP and cooling bath | [Mpa$^{1/2}$] | 6.2 | 6.2 | 6.2 |
| Cooling bath temperature | [°C] | 17 | 30 | 30 |
| Draft ratio | [-] | 5.0 | 18.0 | 3.5 |
| Cleaning solvent type Main component | [-] [-] | Isopropanol PMP | Isopropanol PMP | Isopropanol PMP |
| Presence of dense layer | [-] | Yes | Yes | Yes |
| Average pore diameter converted from NKP plot | [nm] | 0.54 | 0.29 | 0.59 |
| Porosity | [%] | 54 | 42 | 47 |
| Average aperture ratio of cross section | [%] | 36.3 | 28.9 | 42.9 |

[Table 2]

|  |  | Ex. 1 | Ex. 2 | Ex. 3 | Ex. 4 |
|---|---|---|---|---|---|
| Pore diameter variation coefficient α1 in region 1 | [%] | 78 | 122 | 63 | 99 |
| Pore diameter variation coefficient a2 in region 2 | [%] | 76 | 128 | 75 | 87 |
| Pore diameter variation coefficient a3 in region 3 | [%] | 80 | 112 | 75 | 84 |
| Pore diameter variation coefficient a4 in region 4 | [%] | 73 | 133 | 91 | 88 |
| Pore diameter variation coefficient a5 in region 5 | [%] | 96 | 142 | 80 | 76 |
| Pore diameter D1 in region 1 | [nm] | 154 | 95 | 87 | 81 |
| Pore diameter D2 in region | [nm] | 177 | 90 | 227 | 94 |
| Pore diameter D3 in region 3 | [nm] | 240 | 192 | 246 | 119 |
| Pore diameter D4 in region | [nm] | 245 | 115 | 252 | 133 |
| Pore diameter D5 in region | [nm] | 249 | 131 | 263 | 189 |
| (a) D1 ≥ D2 ≥ D3 ≥ D4 ≥ D5 <br> (b) D5 ≥ D4 ≥ D3 ≥ D2 ≥ D1 | [-] | (b) ○ | × | (b) o | (b) o |
| Dense layer thickness Dense layer position | [μm] [-] | 0.17 (b) D1 | 0.22 (b) D1 | 0.21 (b) D1 | 0.86 (b) D1 |
| Shape <br> N2 permeability | [-] <br> [GPU] | Hollow fiber <br> 42 | Hollow fiber <br> 38 | Hollow fiber <br> 47 | Hollow fiber <br> 22 |
| Separation coefficient β (CO2/N2) | [-] | 10.3 | 5.2 | 7.7 | 12.1 |

|  |  | Ex. 5 | Ex. 6 | Ex. 7 |
|---|---|---|---|---|
| Pore diameter variation coefficient α1 in region 1 | [%] | 92 | 121 | 101 |
| Pore diameter variation coefficient a2 in region 2 | [%] | 76 | 139 | 79 |
| Pore diameter variation coefficient a3 in region 3 | [%] | 87 | 102 | 108 |
| Pore diameter variation coefficient a4 in region 4 | [%] | 96 | 98 | 99 |
| Pore diameter variation coefficient a5 in region 5 | [%] | 85 | 101 | 96 |
| Pore diameter D1 in region 1 | [nm] | 175 | 102 | 177 |
| Pore diameter D2 in region 2 | [nm] | 180 | 79 | 205 |
| Pore diameter D3 in region 3 | [nm] | 229 | 188 | 232 |
| Pore diameter D4 in region 4 | [nm] | 229 | 223 | 258 |
| Pore diameter D5 in region 5 | [nm] | 252 | 192 | 299 |
| (a) D1 ≥ D2 ≥ D3 ≥ D4 ≥ D5 <br> (b) D5 ≥ D4 ≥ D3 ≥ D2 ≥ D1 | [-] | (b) ○ | × | (b) o |
| Dense layer thickness <br> Dense layer position | [μm] <br> [-] | 0.32 <br> (b) D1 | 1.12 <br> (b) D1 | 0.20 <br> (b) D1 |
| Shape <br> N2 permeability | [-] <br> [GPU] | Hollow fiber <br> 39 | Hollow fiber <br> 7 | Hollow fiber <br> 60 |
| Separation coefficient β (CO2/N2) | [-] | 10.2 | 9.7 | 8.6 |

[Table 3]

| | | Ex. 8 | Ex. 9 | Ex. 10 | Comp. Ex. 1 | Comp. Ex. 2 |
|---|---|---|---|---|---|---|
| PMP | [wt%] | 35 | 35 | 35 | 35 | 35 |
| Plasticizer | [wt%] | 65 | 65 | 65 | 65 | 65 |
| Plasticizer type | [-] | Dibutyl phthalate | Dibutyl phthalate | Dibutyl phthalate | Dibutyl phthalate | Dibutyl phthalate |
| Exhaust air volume | [m/s] | 18 | 11 | 8 | 0 | 11 |
| Cooling bath type | [-] | Triacetin | Benzyl alcohol | Triacetin | Triacetin | N-methylpyrrolidone |
| Solubility parameter distance Rb between plasticizer and cooling bath | [Mpa$^{1/2}$] | 6.9 | 8.8 | 6.9 | 6.9 | 4.8 |
| Solubility parameter distance Ra between PMP and cooling bath | [Mpa$^{1/2}$] | 6.2 | 9.9 | 6.2 | 6.2 | 11.0 |
| Cooling bath temperature | [°C] | 30 | 30 | 30 | 30 | 30 |
| Draft ratio | [-] | 5.0 | 5.0 | 5.0 | 231.0 | 5.0 |
| Cleaning solvent type | [-] | Isopropanol | Isopropanol | Isopropanol | Isopropanol | Isopropanol |
| Main component | [-] | PMP | PMP | PMP | PMP | PMP |
| Presence of dense layer | [-] | Yes | Yes | Yes | Yes | No |
| Average pore diameter converted from NKP plot | [nm] | 0.47 | 0.72 | 0.76 | 0.80 | Unmeasurable |
| Porosity | [%] | 54 | 49 | 56 | 45 | 54 |
| Average aperture ratio of cross section | [%] | 36.4 | 46.3 | 37.5 | 50.9 | 44.0 |

| | | Comp. Ex. 3 | Comp. Ex. 4 | Comp. Ex. 5 | Comp. Ex. 6 |
|---|---|---|---|---|---|
| PMP | [wt%] | 100 | 100 | 8 | 35 |
| Plasticizer | [wt%] | 0 | 0 | 92 | 65 |
| Plasticizer type | [-] | - | - | Dibutyl phthalate | Dibutyl phthalate |
| Exhaust air volume | [m/s] | 30 | 0 | 11 | 6 |
| Cooling bath type | [-] | | | Triacetin | Triacetin |
| Solubility parameter distance Rb between plasticizer and cooling bath | [Mpa$^{1/2}$] | - | - | 6.9 | 6.9 |

(continued)

|  |  | Comp. Ex. 3 | Comp. Ex. 4 | Comp. Ex. 5 | Comp. Ex. 6 |
|---|---|---|---|---|---|
| Solubility parameter distance Ra between PMP and cooling bath | [Mpa$^{1/2}$] | - | - | 6.2 | 6.2 |
| Cooling bath temperature | [°C] | - | - | 30 | 30 |
| Draft ratio | [-] | 700.0 | 1000.0 | 18.0 | 5.0 |
| Cleaning solvent type | [-] | - | - | - | Isopropanol |
| Main component | [-] | PMP | PMP | PMP | PMP |
| Presence of dense layer | [-] | Yes | No | - | Yes |
| Average pore diameter converted from NKP plot | [nm] | 0.39 | Unmeasurable | - | 2.50 |
| Porosity | [%] | 18 | 31 | - | 56 |
| Average aperture ratio of cross section | [%] | 8.0 | 21.0 | - | 39.2 |

[Table 4]

|  |  | Ex. 8 | Ex. 9 | Ex. 10 | Comp. Ex. 1 | Comp. Ex. 2 |
|---|---|---|---|---|---|---|
| Pore diameter variation coefficient $\alpha 1$ in region 1 | [%] | 78 | 131 | 75 | 228 | 56 |
| Pore diameter variation coefficient a2 in region 2 | [%] | 66 | 109 | 77 | 132 | 68 |
| Pore diameter variation coefficient a3 in region 3 | [%] | 106 | 111 | 82 | 136 | 86 |
| Pore diameter variation coefficient a4 in region 4 | [%] | 86 | 97 | 81 | 178 | 70 |
| Pore diameter variation coefficient a5 in region 5 | [%] | 70 | 86 | 102 | 101 | 73 |
| Pore diameter D1 in region 1 | [nm] | 96 | 205 | 155 | 177 | 80 |
| Pore diameter D2 in region 2 | [nm] | 124 | 225 | 170 | 190 | 290 |
| Pore diameter D3 in region 3 | [nm] | 133 | 255 | 222 | 246 | 279 |
| Pore diameter D4 in region 4 | [nm] | 156 | 263 | 230 | 263 | 253 |
| Pore diameter D5 in region 5 | [nm] | 202 | 306 | 239 | 201 | 229 |
| (a) D1 ≥ D2 ≥ D3 ≥ D4 ≥ D5 (b) D5 ≥ D4 ≥ D3 ≥ D2 ≥ D1 | [-] | (b) o | (b) o | (b) ○ | × | × |
| Dense layer thickness | [μm] | 1.70 | 0.19 | 0.15 | 1.80 | 0 |
| Dense layer position | [-] | (b) D1 | (b) D1 | (b) D1 | (b) D1 | - |
| Shape | [-] | Hollow fiber | Hollow fiber | Hollow fiber | Hollow fiber | Hollow fiber |
| N2 permeability | [GPU] | 31 | 55 | 128 | 31 | 14979 |
| Separation coefficient β (CO2/N2) | [-] | 10.4 | 6.1 | 5.3 | 1.2 | 0.8 |

|  |  | Comp. Ex. 3 | Comp. Ex. 4 | Comp. Ex. 5 | Comp. Ex. 6 |
|---|---|---|---|---|---|
| Pore diameter variation coefficient $\alpha 1$ in region 1 | [%] | 55 | 94 | - | 82 |

(continued)

| | | Comp. Ex. 3 | Comp. Ex. 4 | Comp. Ex. 5 | Comp. Ex. 6 |
|---|---|---|---|---|---|
| Pore diameter variation coefficient a2 in region 2 | [%] | 58 | 89 | - | 80 |
| Pore diameter variation coefficient a3 in region 3 | [%] | 84 | 67 | - | 77 |
| Pore diameter variation coefficient a4 in region 4 | [%] | 76 | 63 | - | 84 |
| Pore diameter variation coefficient a5 in region 5 | [%] | 84 | 105 | - | 92 |
| Pore diameter D1 in region 1 | [nm] | 10 | 83 | - | 156 |
| Pore diameter D2 in region 2 | [nm] | 9 | 82 | - | 165 |
| Pore diameter D3 in region 3 | [nm] | 78 | 57 | - | 209 |
| Pore diameter D4 in region 4 | [nm] | 69 | 127 | - | 231 |
| Pore diameter D5 in region 5 | [nm] | 84 | 83 | - | 252 |
| (a) $D1 \geq D2 \geq D3 \geq D4 \geq D5$<br>(b) $D5 \geq D4 \geq D3 \geq D2 \geq D1$ | [-] | × | × | - | (b) o |
| Dense layer thickness | [μm] | 0.60 | 0 | - | 0.12 |
| Dense layer position | [-] | (b) D1 | - | - | (b) D1 |
| Shape | [-] | Hollow fiber | Hollow fiber | - | Hollow fiber |
| N2 permeability | [GPU] | 3 | 1271 | - | 401 |
| Separation coefficient β (CO2/N2) | [-] | 5.5 | 0.9 | - | 3.0 |

The separation membranes obtained in Examples 1 to 10 satisfied the requirements of the present invention in terms of the average pore diameter converted from the NKP plot, the porosity, and the pore diameter variation coefficient in each region, and all had the $N_2$ permeability of 5 GPU to 400 GPU and the separation coefficient β ($CO_2/N_2$) of 5.0 to 100.0, and had both high permeability and low leakage. Meanwhile, the separation membranes according to Comparative Examples 1 to 6, which did not satisfy the requirements of the present invention in any one of the average pore diameter converted from the NKP plot, the porosity, and the pore diameter variation rate in each region, all had the $N_2$ permeability or the separation coefficient β ($CO_2/N_2$) outside the above ranges.

In any of Examples 1 to 10, the number of voids larger than 10 μm in the support layer was zero.

Although the present invention has been described in detail with reference to specific embodiments, it is apparent to those skilled in the art that various changes and modifications can be made without departing from the spirit and scope of the present invention. The present application is based on Japanese Patent Application No. 2023-061160 filed on April 5, 2023, and the content thereof is incorporated herein by reference. All references cited herein are incorporated as a whole.

INDUSTRIAL APPLICABILITY

The separation membrane according to the present invention can be suitably used for separating a gas from a liquid or applying a gas to a liquid. For example, the separation membrane according to the present invention can be suitably used as a deaerating membrane for reducing the amount of dissolved gas in water, aqueous solutions, organic solvents, and resist solutions in semiconductor manufacturing lines, liquid crystal color filter manufacturing lines, and ink manufacturing for inkjet printers, and as a gas exchange membrane in an artificial lung for medical purposes. In particular, as a deaerating membrane, the separation membrane according to the present invention is very useful for deaerating a photoresist solution, a developing solution, or ultrapure water used in lithography in the semiconductor manufacturing line.

Claims

1. A separation membrane comprising poly (4-methyl-1-pentene) as a main component, wherein

   an average pore diameter converted from an NKP plot is 0.10 nm to 1.00 nm,
   a porosity is 40% to 70%, and
   when the separation membrane is sequentially divided into five regions which are defined as regions 1 to 5 from one surface of the separation membrane in a thickness direction at equal intervals, a pore diameter variation coefficient $\alpha_i$ of a region i is 0% to 150% in all of the regions 1 to 5.

2. The separation membrane according to claim 1, wherein
in the regions 1 to 5, an average pore diameter $D_i$ of the region i satisfies the following requirement (a) or (b):

$$\text{(a) } D_1 \geq D_2 \geq D_3 \geq D_4 \geq D_5,$$

$$\text{(b) } D_5 \geq D_4 \geq D_3 \geq D_2 \geq D_1.$$

3. The separation membrane according to claim 1 or 2, wherein
an average aperture ratio of a cross section of the separation membrane is 25% to 50%.

4. The separation membrane according to claim 2, wherein
the separation membrane has a dense layer on a surface of $D_5$ when the average pore diameter $D_i$ satisfies the requirement (a), and has the dense layer on a surface of $D_1$ when the average pore diameter $D_i$ satisfies the requirement (b).

5. The separation membrane according to claim 4, wherein
the dense layer has a thickness in a range of 0.1 $\mu$m to 2.0 $\mu$m.

6. The separation membrane according to any one of claims 1 to 5, wherein
the separation membrane has a ratio of a $CO_2$ permeability to an $N_2$ permeability (separation coefficient $\beta$ ($CO_2/N_2$)) of 5.0 to 100.0 at a differential pressure of 100 kPa.

7. The separation membrane according to any one of claims 1 to 6, wherein
the separation membrane has the $N_2$ permeability of 5 GPU to 400 GPU at a differential pressure of 100 kPa and 37°C.

8. The separation membrane according to any one of claims 1 to 7, wherein
the separation membrane has a hollow fiber shape.

9. The separation membrane according to claim 8, wherein

in the regions 1 to 5, the separation membrane has a dense layer on a surface of $D_5$ when an average pore diameter $D_i$ of the region i satisfies the following requirement (a), has the dense layer on a surface of $D_1$ when the average pore diameter $D_i$ satisfies the following requirement (b), and
in either case of satisfying the following requirement (a) or (b), a surface on a side having the dense layer is an outer surface of the hollow fiber shaped separation membrane:

$$\text{(a) } D_1 \geq D_2 \geq D_3 \geq D_4 \geq D_5,$$

$$\text{(b) } D_5 \geq D_4 \geq D_3 \geq D_2 \geq D_1.$$

10. A membrane module for at least one of deaeration and aeration, the membrane module comprising:

a case; and
the separation membrane according to any one of claims 1 to 9, wherein
the separation membrane is contained in the case.

11. A device for at least one of deaeration and aeration, the device comprising the membrane module for at least one of deaeration and aeration according to claim 10.

12. A method for producing a liquid, the method comprising:
at least one of removing a dissolved gas and applying a gas using the device for at least one of deaeration and aeration according to claim 11.

13. A method for manufacturing a separation membrane, the method comprising:

(1) a preparation step of melt-kneading a mixture containing 10 mass% or more and 50 mass% or less of poly (4-methyl-1-pentene) and 50 mass% or more and 90 mass% or less of a plasticizer to obtain a resin composition; and
(2) a forming step of ejecting the resin composition from an ejection die, exhausting a volatilized plasticizer at a wind speed of 8 m/s to 20 m/s, and then immersing the resin composition in a cooling bath using a solvent having a solubility parameter distance Ra for poly (4-methyl-1-pentene) in a range of 5.0 MPa$^{1/2}$ or more and 18 MPa$^{1/2}$ or less and a solubility parameter distance Rb for the plasticizer in a range of 1.0 MPa$^{1/2}$ or more and 2.9 MPa$^{1/2}$ or less or 6.5 MPa$^{1/2}$ or more and 10.0 MPa$^{1/2}$ or less, followed by winding the resin composition.

14. The method for manufacturing a separation membrane according to claim 13, wherein
the cooling bath in the forming step is at 15°C to 45°C.

15. The method for manufacturing a separation membrane according to claim 13 or 14, wherein
the winding in the forming step has a draft ratio of 3.0 to 20.0.

## FIG. 1

MEMBRANE SURFACE

5.00μm

## FIG. 2

MEMBRANE SURFACE

## FIG. 3

MEMBRANE
SURFACE

DENSE LAYER
THICKNESS

## INTERNATIONAL SEARCH REPORT

International application No.

**PCT/JP2024/006234**

### A. CLASSIFICATION OF SUBJECT MATTER

***B01D 71/26***(2006.01)i; ***B01D 69/00***(2006.01)i; ***B01D 69/02***(2006.01)i; ***B01D 71/02***(2006.01)i; ***C08J 9/26***(2006.01)i; ***D01F 6/04***(2006.01)i
FI: B01D71/26; B01D69/00; B01D69/02; B01D71/02; C08J9/26 102; D01F6/04 C; C08J9/26 CES

According to International Patent Classification (IPC) or to both national classification and IPC

### B. FIELDS SEARCHED

Minimum documentation searched (classification system followed by classification symbols)
B01D53/22; B01D61/00-71/82; C02F1/44; C08J9/26; D01F6/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2022/230923 A1 (TORAY INDUSTRIES, INC.) 03 November 2022 (2022-11-03) claims, examples | 1-15 |
| A | WO 2015/156403 A1 (ASAHI KASEI MEDICAL CO., LTD.) 15 October 2015 (2015-10-15) paragraphs [0076]-[0079] | 1-15 |
| A | JP 6-246140 A (DAINIPPON INK & CHEMICALS INC.) 06 September 1994 (1994-09-06) claims, examples | 1-15 |
| A | US 6409921 B1 (MEMBRANA GMBH) 25 June 2002 (2002-06-25) claims, examples | 1-15 |

☐ Further documents are listed in the continuation of Box C.     ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **04 April 2024** | **16 April 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

INTERNATIONAL SEARCH REPORT
Information on patent family members

International application No.

**PCT/JP2024/006234**

| Patent document cited in search report | | | Publication date (day/month/year) | Patent family member(s) | | | Publication date (day/month/year) |
|---|---|---|---|---|---|---|---|
| WO | 2022/230923 | A1 | 03 November 2022 | KR | 10-2024-0000455 | A | |
| WO | 2015/156403 | A1 | 15 October 2015 | US | 2017/0029462 | A1 | |
| | | | | paragraphs [0089]-[0092] | | | |
| | | | | EP | 3130392 | A1 | |
| | | | | KR | 10-2016-0087891 | A | |
| | | | | CN | 105980037 | A | |
| JP | 6-246140 | A | 06 September 1994 | (Family: none) | | | |
| US | 6409921 | B1 | 25 June 2002 | JP | 2001-510724 | A | |
| | | | | claims, examples | | | |
| | | | | WO | 1999/004891 | A1 | |
| | | | | CN | 1265047 | A | |
| | | | | KR | 10-0567153 | B1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005515061 A
- JP H8332359 A
- JP H7155569 A
- JP 2023061160 A

**Non-patent literature cited in the description**

- *Membrane.*, 2011, vol. 383, 152-158
- *Ind. Eng. Chem. Res.*, 2011, vol. 50, 3798-3817
- **CHARLES HANSEN**. *Hansen Solubility Parameter in Practice*